(19) **Europäisches Patentamt**
**European Patent Office**
**Office européen des brevets**

(11) **EP 2 399 113 B1**

(12) **EUROPÄISCHE PATENTSCHRIFT**

(45) Veröffentlichungstag und Bekanntmachung des Hinweises auf die Patenterteilung:
**23.11.2016 Patentblatt 2016/47**

(21) Anmeldenummer: **10704543.7**

(22) Anmeldetag: **10.02.2010**

(51) Int Cl.:
*G01M 3/20* (2006.01)  *G01L 27/00* (2006.01)
*G01L 21/30* (2006.01)

(86) Internationale Anmeldenummer:
**PCT/EP2010/051652**

(87) Internationale Veröffentlichungsnummer:
**WO 2010/094608 (26.08.2010 Gazette 2010/34)**

(54) **VERFAHREN ZUR FUNKTIONSPRÜFUNG EINES LECKSUCHGERÄTES**

METHOD FOR FUNCTIONALLY TESTING A LEAK DETECTOR

PROCÉDÉ DE VÉRIFICATION DU FONCTIONNEMENT D'UN APPAREIL DE RECHERCHE DE FUITE

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **18.02.2009 DE 102009009370**

(43) Veröffentlichungstag der Anmeldung:
**28.12.2011 Patentblatt 2011/52**

(73) Patentinhaber: **Inficon GmbH**
**50968 Köln (DE)**

(72) Erfinder: **ROLFF, Randolf**
**50169 Kerpen-Horrem (DE)**

(74) Vertreter: **dompatent von Kreisler Selting Werner - Partnerschaft von Patent- und Rechtsanwälten mbB**
**Deichmannhaus am Dom**
**Bahnhofsvorplatz 1**
**50667 Köln (DE)**

(56) Entgegenhaltungen:
**DE-A1- 2 926 112    DE-A1-102006 016 747**
**GB-A- 619 133    US-A- 3 436 955**
**US-A- 4 269 058    US-A- 4 384 470**
**US-A- 5 661 229    US-A1- 2008 202 210**

EP 2 399 113 B1

**Beschreibung**

Die Erfindung betrifft ein Verfahren zur Funktionsprüfung eines Lecksuchgerätes, das einen Partialdrucksensor enthält, welcher einen Gaseinlass aufweist.

Lecksuchgeräte dienen dazu, das Vorhandensein eines Testgases in einer Gasströmung zu ermitteln. Die Gasströmung wird normalerweise durch Absaugen von Gas aus einem Behälter erzeugt; es kann aber auch die Strömung nur durch Diffusion verwendet werden. Wenn ein Testgas, üblicherweise Helium, von außen gegen den Behälter gesprüht wird, dringt im Falle eines Lecks Testgas in das Innere des Behälters ein, so dass das Testgas in der abgesaugten Gasströmung 5. März 2012 nachweisbar ist. Eine andere Methode sieht vor, dass Testgas in den auf Dichtheit zu überprüfenden Behälter eingeführt wird. An der Außenseite des Behälters wird mit einem Schnüffellecksucher gesaugt, um austretendes Testgas zu erkennen.

Wenn in einer Vakuumanlage, die einen zu evakuierenden Behälter sowie die entsprechende Vakuumpumpvorrichtung aufweist, eine Leckprüfung vorgenommen werden soll, wird ein Lecksuchgerät an die Saugleitung der Vakuumpumpvorrichtung angeschlossen. Während aufwändige Lecksuchgeräte zum Nachweis des Testgases ein Massenspektrometer enthalten, sind auch Partialdrucksensoren bekannt, die einen geringeren Aufwand erfordern und relativ leichtgewichtig sind. Ein solcher Partialdrucksensor für Helium oder Wasserstoff als Testgas ist in WO 2002 003057 (Inficon) beschrieben. Der Sensor enthält ein Fenster mit einer z.B. für Helium selektiv durchlässigen Membran, die eine Sensorkammer begrenzt, und im Inneren der Sensorkammer einen Drucksensor. Der Sensor arbeitet bei beliebigen Umgebungsdrücken.

Ein weiteres Beispiel eines Partialdrucksensors ist in DE 10 2006 047 856 A1 (Inficon) beschrieben. Derartige Partialdrucksensoren sind unter der Bezeichnung Wise Technology™ bekannt.

Ein Verfahren zur Funktionsprüfung eines Lecksuchgerätes gemäß dem Oberbegriff des Patentanspruchs 1 ist beschrieben in DE 10 2006 016 747 A1. Dieses Verfahren stellt eine dynamische Spülgasmethode dar. Bei dem Verfahren erfolgt eine Injektion einer Testgasmischung in die Leckprüfvorrichtung. Die Injektionsvorrichtung umfasst eine Spritze oder ein Dosierventil für die Einführung von Luft mit einer bestimmten Leckrate in eine Teilstromkammer. Alternativ zur Luft kann Helium oder ein Helium-Testgas-Gemisch oder ein atmosphärisches Testleck verwendet werden. Die Injektionseinrichtung kann manuell betätigt werden. Im einfachsten Fall der Testgasinjektion wird durch das Injizieren einer sehr geringen Testgasmasse die Reaktionszeit der Messanordnung bestimmt.

US 2008/0202210 A1 offenbart ein Lecksuchgerät umfassend eine Messeinheit zur Detektion eines Testgases, die hinter einer selektiv für das Testgas durchlässigen Membran angeordnet ist. Die Messeinheit enthält einen Ionisationssensor zur Detektion des Testgases. Zur Kalibrierung des Lecksuchgeräts wird eine Referenzleckeinheit verwendet.

US 4 269 058 offenbart ein Verfahren zur Kalibrierung und Prüfung der Genauigkeit eines Sphygmomanometers anhand einer Spritze, die mit dem Sphygmomanometer hermetisch verbunden wird.

Der Erfindung liegt die Aufgabe zugrunde, ein Verfahren zur Funktionsprüfung eines Lecksuchgerätes anzugeben, bei dem der Funktionstest ohne Förderpumpe durchgeführt werden kann.

Das Verfahren nach der vorliegenden Erfindung zeichnet sich durch die Merkmale des Patentanspruchs 1 aus.

Das erfindungsgemäße Verfahren zur Funktionsprüfung verzichtet auf maschinelle Vakuumpumpen und benutzt stattdessen eine Prüfvorrichtung mit einem Raum mit veränderbarem Volumen. Eine solche Prüfvorrichtung kann leicht transportiert und an das Lecksuchgerät angeschlossen werden. Ihre Betätigung erfolgt vorzugsweise manuell, so dass auch keine Motoren oder sonstige Antriebe erforderlich sind.

Das Verfahren eignet sich besonders für Helium-Lecksucher für den Einsatz bei Vakuumanlagen, die einen Behälter und eine Vakuumpumpvorrichtung aufweisen. Der Lecksucher wird an geeigneter Stelle an die Saugleitung angeschlossen. Er benötigt keine eigene Pumpe, da die Saugströmung von der Vakuumpumpvorrichtung der Anlage erzeugt wird. Ein derartiger Mini-Lecksucher eignet sich besonders für Servicezwecke, da er wegen der fehlenden eigenen Pumpen leicht zu transportieren ist. Vor einem Serviceeinsatz möchte der Servicetechniker den Lecksucher auf Funktion prüfen, möglichst sogar mit Überprüfung der Empfindlichkeit. So kann er vermeiden, dass er mit einem defekten Gerät auf die Reise geht oder ein defektes Gerät an die Anlage anschließt. Da der Lecksucher keine eingebaute Pumpe hat, erfolgt die Funktionsprüfung mit einer kleinen und leichtgewichtigen Prüfvorrichtung.

Die Erfindung nutzt den Effekt, dass ein Testgas, wie Helium oder Wasserstoff, in der Umgebungsluft enthalten ist, und dass der Testgasanteil an der Luft relativ konstant ist. Durch Vergrößerung des Raumes der Prüfvorrichtung kann der Druck, dem der Einlass des Sensors ausgesetzt ist, verringert werden, wodurch sich auch der Partialdruck des Testgases entsprechend verringert. Damit ist eine Funktionsprüfung des Lecksuchgerätes möglich, indem geprüft wird, ob das Lecksuchgerät die Partialdruckänderung anzeigt. Auch eine Kalibrierung des Lecksuchgerätes ist möglich, indem die gemessene Partialdruckänderung in Bezug gesetzt wird zu dem in der Umgebungsluft vorhandenen Heliumanteil.

Die Prüfvorrichtung besteht vorzugsweise aus einer Spritze, ähnlich wie sie bei der Verabreichung medizinischer Flüssigkeiten benutzt wird. Eine solche Spritze hat einen Spritzenzylinder und einen darin bewegbaren Kolben, der mit einer Kolbenstange verbunden ist. Durch Zurückziehen des Kolbens wird der Raum im Inneren der Spritze vergrößert.

Am vorderen Ende des Spritzenzylinders befindet sich ein Spritzenkonus. Dieser kann druckdicht mit einem Adapter verbunden werden, welcher am Einlass des Partialdrucksensors montiert ist.

Die Erfindung ermöglicht dem Servicetechniker eine einfache Funktionsprüfung und Kalibrierung des Lecksuchgerätes ohne maschinellen Aufwand an jeglichem Ort. Alles, was mitgeführt werden muss, ist eine manuell zu betätigende Prüfvorrichtung. Anstelle einer Spritze kann die Prüfvorrichtung aus einer Kolbenzylindereinheit oder einem anderen volumenveränderbaren Raum bestehen.

Im Folgenden wird unter Bezugnahme auf die Zeichnungen ein Ausführungsbeispiel der Erfindung näher erläutert.

Es zeigen:

Figur 1    den Einsatz eines Partialdrucksensors bei einer Anlage, die aus einem druckdichten Behälter und einer Vakuumpumpvorrichtung besteht und

Figur 2    eine schematische Darstellung der Verwendung einer Prüfvorrichtung bei einem Partialdrucksensor, der gemäß Figur 1 benutzt werden soll.

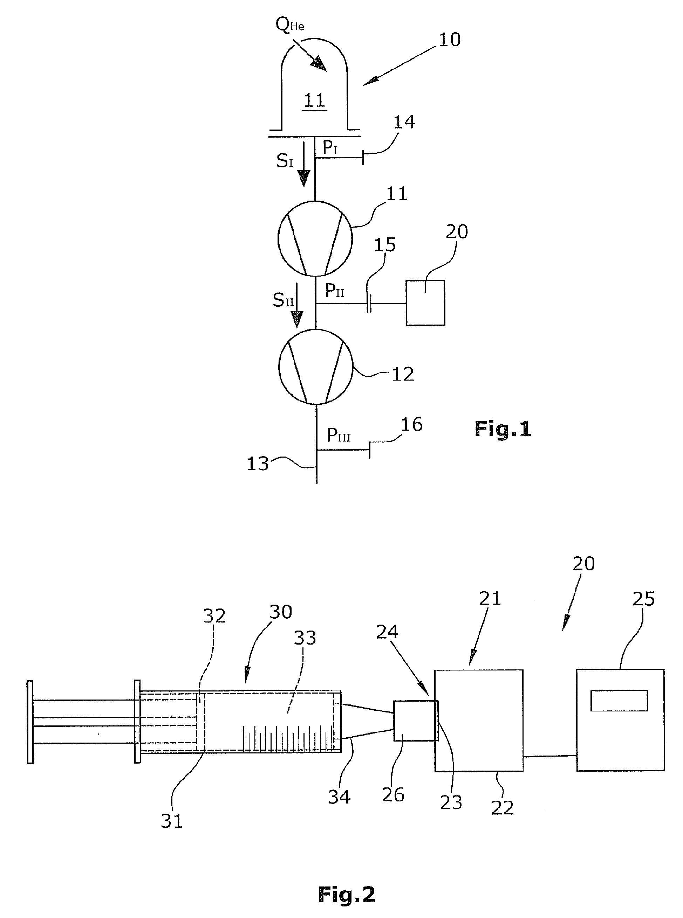

In Figur 1 ist eine Vakuumanlage dargestellt, die einen Behälter 10 aufweist, dessen Innenraum zu evakuieren ist. Der Behälter 10 kann ein Reaktor zur Vakuumbehandlung von Werkstücken sein, beispielsweise zum Sputtern, Bedampfen, CVD o. dgl..

Die Vakuumprüfung bezieht sich darauf festzustellen, ob ein Testgas, hier: Helium, von außen in den evakuierten Behälter 10 eindringt. Die Leckrate von Helium ist mit $Q_{He}$ bezeichnet.

Der Behälter 10 ist an eine Vakuumpumpe 11, beispielsweise eine Wälzkolbenpumpe, angeschlossen. Der Auslass der Vakuumpumpe 11 ist mit dem Saugeinlass einer Vorvakuumpumpe 12 verbunden. Der Auslass 13 der Vorvakuumpumpe 12 führt in die Umgebungsluft, in der Atmosphärendruck herrscht.

Am Saugeinlass der Vakuumpumpe 11 herrscht das Saugvermögen $S_I$ und der Druck $P_I$. Dort befindet sich ein Anschluss 14, an den ein Lecksuchgerät angeschlossen werden kann.

Am Saugeinlass der Vorvakuumpumpe 12 herrscht das Saugvermögen $S_{II}$ und der Druck $P_{II}$. Dort befindet sich ein Anschluss 15, an den wahlweise ebenfalls das Lecksuchgerät angeschlossen werden kann.

Am Auslass der Vorvakuumpumpe 12 herrscht der Druck $P_{III}$. Dort befindet sich ein Anschluss 16, an den wahlweise ebenfalls das Lecksuchgerät angeschlossen werden kann.

Das Lecksuchgerät 20 ist in Figur 1 an den Anschluss 15 angeschlossen.

Typische Bereiche der Parameter $Q_{He}$, V, P und S während des Betriebes der Vakuumanlage sind folgende:

$$\mathbf{Q_{He}} = 10^{-7}...\mathbf{10^{-4}}...10^{-3}...10^{-1} \text{mbarl/s(Grob)}$$

$$\mathbf{V} = [0,5\text{l}]\ 0,5\text{m}^3...\mathbf{80m^3}$$

$$\mathbf{P_I} = 10^{-2}...15\text{mbar}$$

$$\mathbf{S_I} = ...800\text{l/s}\ (3000\text{m}^3/\text{h})$$

$$\mathbf{P_{II}} = 10^{-2}...0,1...45\text{mbar}$$

$$\mathbf{S_{II}} = 1...350\text{l/s}\ (1260\text{m}^3/\text{h})$$

$$\mathbf{P_{III}} = \text{Atm}$$

In Figur 2 ist die Funktionsprüfung des Lecksuchgerätes 20 dargestellt. Das Lecksuchgerät weist einen Partialdrucksensor 21 auf, der in gleicher Weise ausgebildet ist, wie in DE 100 31 882 A1 beschrieben ist, die hiermit durch Verweis in die vorliegende Anmeldung einbezogen wird. Der Partialdrucksensor weist eine Detektionskammer 22 auf, die ein selektiv für Helium durchlässiges Fenster hat, welches den Einlass 24 des Partialdrucksensors bildet. In der Detektionskammer 22 befindet sich ein Drucksensor, beispielsweise in Form eines Penning-Drucksensors, wie auch in DE 10 2004 034 831 A1 beschrieben ist. Dieser liefert eine dem Helium-Partialdruck entsprechende Anzeige an eine Auswerteeinheit 25.

An den Einlass 24 ist ein Adapter 26 angeschlossen, der den druckdichten Anschluss einer Prüfvorrichtung 30 ermöglicht. Die Prüfvorrichtung 30 besteht hier aus einer Spritze, die einen Spritzenzylinder 31 und einen darin verschiebbaren Kolben 32 aufweist. Vor dem Kolben 32 befindet sich der volumenveränderbare Raum 33. Durch manuelles Verschieben des Kolbens 32 wird die Größe des Raumes 33 verändert. Am vorderen Ende der Spritze befindet sich der Spritzenkonus 34, der mit dem Adapter 26 druckdicht verbunden wird.

Der Partialdrucksensor 21 misst den Helium-Partialdruck. An dem Partialdrucksensor ist die Prüfvorrichtung 30 angeschlossen, wobei das Blindvolumen zwischen dem Fenster 23 und dem vorderen Ende des Kolbenweges definiert sein soll, um bei einer Volumenänderung eine stabile definierte Druckänderung zu erzeugen.

Zunächst herrscht an dem Sensor ein Luftdruck von 1000mbar und ein Helium-Partialdruck von etwa 5E-3 mbar. Wenn man jetzt mit dem Spritzenkolben den Zylinderraum auf ein bekanntes Volumen vergrößert, unter Beobachtung der auf dem Spritzenzylinder angebrachten Skala, erniedrigt sich der Luftdruck und der Helium-Partialdruck am Sensor, um ein Verhältnis, das vom Blindvolumen und vom Spritzenvolumen abhängt. Die Spritze wird sozusagen als "Pumpe" verwendet. Durch diesen Druckabfall wird sich die Leckratenanzeige des Lecksuchers ändern. Somit kann man die Funktion des Lecksuchers prüfen und bei bekanntem Helium-Partialdruck sogar die Empfindlichkeit des Lecksuchers quantitativ überprüfen.

Die Erfindung bietet die folgenden Vorteile:

- Man benötigt weder eine Pumpe noch weitere Gase (wie Stickstoff oder Helium).
- Die erforderlichen Messmittel sind äußerst preiswert; eine Ersatzspritze ist überall erhältlich.
- Es wird echt die Helium-Empfindlichkeit gemessen, nicht irgendeine Ersatzgröße. Damit wird die gesamte Messstrecke überprüft.
- Man kann auch quantitative Aussagen erhalten.

**Patentansprüche**

1. Verfahren zur Funktionsprüfung eines Lecksuchgerätes, bei welchem an das Lecksuchgerät (20) eine Prüfvorrichtung (30) angeschlossen wird, die einen Raum (33) mit veränderbarem Volumen aufweist,
   **dadurch gekennzeichnet, dass**
   das Lecksuchgerät (20) einen Partialdrucksensor (21) enthält, welcher einen Gaseinlass (24), eine Detektionskammer mit einem selektiv für ein Testgas durchlässigen Fenster (23) und einen Drucksensor zur Lieferung einer dem Testgas-Partialdruck entsprechenden Anzeige aufweist, dass durch Änderung der Größe des Raumes (33) der Partialdruck des in der Umgebungsluft enthaltenen Testgases am Gaseinlass (24) des Partialdrucksensors verändert wird, und dass geprüft wird, ob das Lecksuchgerät die Veränderung anzeigt.

2. Verfahren nach Anspruch 1, **dadurch gekennzeichnet, dass** die Prüfvorrichtung aus einer Spritze mit einem Spritzenzylinder (31) und einem darin bewegbaren Kolben (32) besteht.

3. Verfahren nach Anspruch 1, **dadurch gekennzeichnet, dass** die Veränderung des Volumens des Raumes (33) darin besteht, dass durch Bewegen eines Spritzenkolbens der Zylinderraum vergrößert wird.

4. Verfahren nach einem der Ansprüche 1 bis 3, **dadurch gekennzeichnet, dass** die Prüfvorrichtung (30) von Hand betätigt wird.

5. Verfahren nach Anspruch 2, **dadurch gekennzeichnet, dass** der Einlass (24) des Partialdrucksensors (21) mit einem Adapter (26) versehen wird, der den druckdichten Anschluss einer Spritze ermöglicht.

**Claims**

1. A method for the functional testing of a leak detector, wherein a testing device (30) comprising a chamber (33) with variable volume is being connected to the leak detector (20),
   **characterized in that**
   the leak detector (20) includes a partial pressure sensor (21), said partial pressure sensor comprising a gas inlet (24), a detection chamber having a window (23) selectively permeable to a test gas, and a pressure sensor for providing an indication corresponding to the partial pressure of the test gas, that, by changing the size of said chamber (33), the partial pressure of the test gas contained in the ambient air is changed at the gas inlet (24) of the partial pressure sensor, and that it is checked whether the leak detector indicates the change.

2. The method according to claim 1, **characterized in that** the testing device comprises a syringe having a syringe barrel (31) and a piston (32) arranged for movement in said syringe barrel.

3. The method according to claim 1, **characterized in that** the variation of the volume of the chamber (33) consists **in that** the cylinder space is enlarged by movement of a syringe piston.

4. The method according to any one of claims 1 to 3, **characterized in that** the testing device (30) is operated manually.

5. The method according to claim 2, **characterized in that** the inlet (24) of the partial pressure sensor (21) is being provided with an adapter (26) allowing for pressure-tight connection of a syringe.


**Revendications**

1. Procédé de vérification du fonctionnement d'un appareil de recherche de fuite, dans lequel est raccordé à l'appareil de recherche de fuite (20) un dispositif de contrôle (30) qui comporte un espace (33) à volume variable, **caractérisé en ce que** l'appareil de recherche de fuite (20) contient un capteur de pression partielle (21), qui présente une entrée de gaz (24), une chambre de détection pourvue d'une fenêtre (23) sélectivement perméable à un gaz de test et un capteur de pression devant fournir une indication correspondant à la pression partielle du gaz de test, **en ce que** la pression partielle du gaz de test contenu dans l'air ambiant à l'entrée de gaz (24) du capteur de pression partielle est modifiée en faisant varier le volume de l'espace (33) et **en ce qu'**il est vérifié si l'appareil de recherche de fuite affiche la variation.

2. Procédé selon la revendication 1, **caractérisé en ce que** le dispositif de contrôle est constitué d'une seringue dotée d'un cylindre de seringue (31) et d'un piston (32) déplaçable à l'intérieur.

3. Procédé selon la revendication 1, **caractérisé en ce que** la variation du volume de l'espace (33) consiste à agrandir la chambre du cylindre par déplacement d'un piston de seringue.

4. Procédé selon l'une des revendications 1 à 3, **caractérisé en ce que** le dispositif de contrôle (30) est actionné manuellement.

5. Procédé selon la revendication 2, **caractérisé en ce que** l'entrée (24) du capteur de pression partielle (21) est pourvue d'un adaptateur (26) qui permet le raccordement étanche à la pression d'une seringue.

$Q_{He}$

_11_

$P_I$ 14

$S_I$

11

15  20

$P_{II}$

$S_{II}$

12

16

$P_{III}$

13

**Fig.1**

32 30 33  21 20 25

24

34 26 23 22

31

**Fig.2**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2002003057 A
- DE 102006047856 A1
- DE 102006016747 A1
- US 20080202210 A1
- US 4269058 A
- DE 10031882 A1
- DE 102004034831 A1